Europäisches Patentamt

European Patent Office

Office européen des brevets

(11) Veröffentlichungsnummer: **0 319 853**
**A2**

# (12) EUROPÄISCHE PATENTANMELDUNG

(21) Anmeldenummer: 88120119.8

(22) Anmeldetag: 02.12.88

(51) Int. Cl.4: **B01D 45/10 , B01D 46/22**

(30) Priorität: 05.12.87 DE 3741291
05.08.88 DE 3826684

(43) Veröffentlichungstag der Anmeldung:
14.06.89 Patentblatt 89/24

(84) Benannte Vertragsstaaten:
AT CH DE FR GB IT LI SE

(71) Anmelder: **E.S.S. ERZEUGNISSE SCHWEISS-
UND SCHNEIDTECHNIK GMBH**

**D-6393 Wehrheim 3(DE)**

(72) Erfinder: **Lange, Gerhardt**
**Steinkopfstrasse 22**
**D-6393 Wehrheim 3(DE)**

(74) Vertreter: **Boecker, Joachim, Dr.-Ing.**
**Rathenauplatz 2-8**
**D-6000 Frankfurt a.M. 1(DE)**

(54) **Verfahren und Vorrichtung zum Herausfiltern von Verunreinigungen aus einem Gas.**

(57) Verfahren und eine Vorrichtung zum Herausfiltern von Verunreinigungen aus einem Gas, wobei
das zu reinigende Gas (7) mit hoher Geschwindigkeit
mittels Düsen (6) gegen eine oder mehrere, unmittelbar vor den Düsen angeordnete gasundurchlässige Auffangmatte (8) geblasen wird, die auf ihrer dem
zu reinigenden Gas zugewandten Seite eine Saugschicht trägt, die gasdurchlässig ist und in hohem
Maße Flüssigkeit aufzusaugen vermag. Dabei bleiben die im Gas enthaltenen Partikel in der genannten Schicht hängen, während das Gas durch die
Spalträume (24) um die Auffangmatte herum abströmt. Die Auffangmatte (8) kann als umlaufendes
endloses Band ausgebildet sein, das an seinem unteren Ende in eine Flüssigkeit (17) eintaucht, in der
die Verunreinigungen ausgewaschen werden und die
Matte erneut mit Flüssigkeit beladen wird. Alternativ
können mehrere Auffangmatten vorhanden sein, von
denen jede auf eine eigene sich drehende Walze
aufgespannt ist.

Fig. 1

## Verfahren und Vorrichtung zum Herausfiltern von Verunreinigungen aus einem Gas

Die Erfindung betrifft ein Verfahren und eine Vorrichtung zum Herausfiltern von Verunreinigungen aus einem Gas gemäß dem Oberbegriff des Anspruches 1. Bei den Verunreinigungen handelt es sich in erster Linie um Festkörperpartikel. Ein solches Verfahren ist im wesentlichen bekannt aus der US-PS 38 53 506.

Die Reinigung von Gasen, insbesondere die Entfernung von feinen festen Partikeln aus dem zu reinigenden Gas, stellt ein großes Problem dar. Es ist bekannt, zu diesem Zweck elektrostatische Filter und Textilfilter zu verwenden. Elektrostatische Filter sind relativ aufwendig, und ihre Wirksamkeit läßt mit zunehmender Dicke der an den Elektroden abgeschiedenen Partikelschicht schnell nach. Aus diesem Grunde ist ein häufiges Stillsetzen und Reinigen dieser Filter erforderlich, wozu ebenfalls aufwendige Einrichtungen, wie Rüttelvorrichtungen, erforderlich sind.

Bekannte Textilfilter beruhen auf dem Prinzip, daß das zu reinigende Gas durch eine gasdurchlässige Textilwand geblasen wird, wobei die Partikel in der Wand haften bleiben. Die Strömungsgeschwindigkeit des Gases ist hierbei relativ gering, um ein Mitreißen größerer Mengen von Partikeln durch die Textilwand hindurch zu verhindern. Die geringe Strömungsgeschwindigkeit erfordert relativ große Strömungsquerschnitte, und auch die Erneuerung und Reinigung der Textilfilterwand bereitet Probleme.

Aus der US-PS 38 53 506 ist ein Verfahren bekannt, bei dem in einer Kammer ein flexibles gasundurchlässiges Band umläuft, und das zu reinigende Gas über eine einzige Eintrittsöffnung in die Kammer mit Richtung auf das umlaufende flexibles Endlosband eingeleitet wird. Der Abstand zwischen der Eintrittsöffnung des zu reinigenden Gases und dem Band ist relativ groß (Größenordnung 25 cm), was bereits mit Rücksicht auf das relativ große Luftvolumen erforderlich ist, welches durch die Eintrittsöffnung einströmt. Die Austrittsströmungsgeschwindigkeit des Gases aus der Eintrittsöffnung ist relativ niedrig (Größenordnung 5 m/sek). Das umlaufende Band hat eine im wesentlichen glatte Oberfläche, und dank seiner Flexibilität verformt es sich in Strömungsrichtung des Gases konkav. Hierdurch soll erreicht werden, daß nach oben durch den Aufprall umgelenkte Schmutzpartikel an der konkaven Wölbung nach unten umgelenkt werden. Als fakultative Möglichkeit ist eine Befeuchtung des Bandes vorgesehen. Mit diesem bekannten Verfahren lassen sich hohe Reinigungsgrade, insbesondere bei feinen Stäuben, nicht erzielen. Um überhaupt eine zufriedenstellende Reinigung zu erreichen, sind der beschriebenen Reinigungskammer weitere Reinigungskammern nachgeschaltet, in denen das strömende Gas zunächst beschleunigt wird und dann an einer Prallplatte umgelenkt wird.

Der Erfindung liegt die Aufgabe zugrunde, ein Verfahren und eine Vorrichtung zum Herausfiltern von Verunreinigungen aus einem Gas zu entwickeln, welches Verfahren sich durch große Wirksamkeit und kostensparende Betriebsweise auszeichnet und das mit einer relativ einfache Vorrichtung ausführbar ist.

Zur Lösung dieser Aufgabe wird ein Verfahren zum Herausfiltern von Verunreinigungen aus einem Gas vorgeschlagen, welches erfindungsgemäß die im kennzeichnenden Teil des Anspruches 1 genannten Merkmale hat.

Vorteilhafte Ausgestaltungen des Verfahrens sind in den Ansprüchen 2 bis 6 genannt.

Eine Vorrichtung zur Durchführung des Verfahrens ist gemäß der Erfindung durch die im Anspruch 7 genannten Merkmale gekennzeichnet.

Vorteilhafte Ausgestaltungen dieser Vorrichtung sind in den Ansprüchen 8 bis 15 genannt.

Die Erfindung beruht auf dem Prinzip, daß das zu reinigende Gas mit großer Geschwindigkeit gegen eine Auffangmatte geschleudert wird, die nicht gasdurchlässig ist und die auf der Anströmseite eine Schicht trägt, welche einerseits gasdurchlässig ist, aber andererseits die Verunreinigungen durch Adhäsion, Verkleben und/oder Verhaken in der Struktur der Schicht zurückhält.

Der Abstand der Austrittsmündungen der Düsen von der Matte ist relativ klein, damit die hohe Aufprallgeschwindigkeit des zu reinigenden Gases gegen die Matte nicht verloren geht. Er beträgt vorzugsweise nicht mehr als 2 mm. Der Abstand kann bis auf den Wert Null gesenkt werden. Die räumliche Anordnung kann sogar so getroffen werden, daß die genannten Mündungen geringfügig in die die Flüssigkeit aufnehmende Saugschicht der Auffangmatten hineinragen.

Die Strömumgsgeschwindigkeit, mit der das zu reinigende Gas aus den Düsen austritt, muß hoch sein. Als Anhalt können Strömungsgeschwindigkeitswerte von 10 bis 70 m/s genannt werden; zweckmäßigerweise sollen die Werte jedoch nicht unter 20 m/s, vorzugsweise nicht unter 30 m/s, liegen.

Es hat sich gezeigt, daß bei der Reinigung von Luft, die mit Metall bzw. mit Metalloxydstäuben mit Partikelgrößen zwischen 1 und 1000 Mikrometer verschmutzt war, nach der Reinigung gemäß der Erfindung praktisch keine Partikel mehr mit einer Größe von über 100 Mikrometer vorhanden waren, während der Restgehalt an Partikeln unter 100 Mikrometer kaum noch nachweisbar war. Der erzielbare Reinigungsgrad für Fein- und Feinststäube liegt bei über 95 %.

In der Regel wird als Benetzungsflüssigkeit für die Auffangmatte Wasser verwendet, wobei dieses besonders behandelt sein kann, zum Beispiel durch Weichmacher. Grundsätzlich sind jedoch auch andere Flüssigkeiten geeignet, insbesondere auch solche mit einer höheren Viskosität als Wasser, wodurch höhere Adhäsionsgrade erreichbar sind.

Die Erfindung ist in erster Linie zur Entfernung von Festkörperpartikeln aus dem zu reinigenden Gas, in der Regel Luft, geeignet. Es ist aber auch möglich, toxische Gase aus dem zu reinigenden Gas zu entfernen bzw. den Gehalt an toxischen Gasen herabzusetzen, und zwar durch geeignete chemische Zusätze zu der Flüssigkeit, die diese toxischen Gase entweder binden oder in unschädliche Gase umwandeln.

Das Verfahren und die Vorrichtung gemäß der Erfindung zeichnen sich durch einen gleichbleibenden Wirkungsgrad und durch Unempfindlichkeit gegen Verstopfungen bei öl- oder wasserhaltiger Luft aus. Da ein Teil des als bindende Flüssigkeit verwendeten Wassers zur Sättigung der Luft verbraucht wird, fällt kein mit Schadstoffen beladenes und zu entsorgendes Wasser an wie bei Naßfiltern.

Anhand der in den Figuren gezeigten Ausführungsbeispiele soll die Erfindung näher erläutert werden. Es zeigen

Figur 1 ein erstes Ausführungsbeispiel einer Vorrichtung gemäß der Erfindung im vertikalen Schnitt,

Figur 2 die Vorrichtung gemäß Figur 1 im Schnitt längs der Linie A-A.

Figur 3 ein zweites Ausführungsbeispiel einer Vorrichtung gemäß der Erfindung in schematischer Darstellung, in Seitenansicht und teilweise geschnitten längs der Linie A-A in Figur 4,

Figur 4 das Ausführungsbeispiel gemäß Figur 3 im Schnitt längs der Linie B-B in Figur 3,

Figur 5a einen Ausschnitt aus einer in den Vorrichtungen verwendbare Düsenplatte,

Figur 5b eine Draufsicht auf eine bei der Erfindung verwendbare Düsenwand mit alternativen Ausführungen der Düsenöffnungen,

Figur 6 im Schnitt und und in vergrößerter Darstellung einen Ausschnitt aus einer in der Vorrichtung verwendbaren Auffangmatte,

Figur 7 in vergrößertem Maßstab einen Ausschnitt aus einer anderen Ausführungsform der Düsenwand mit den Düsen.

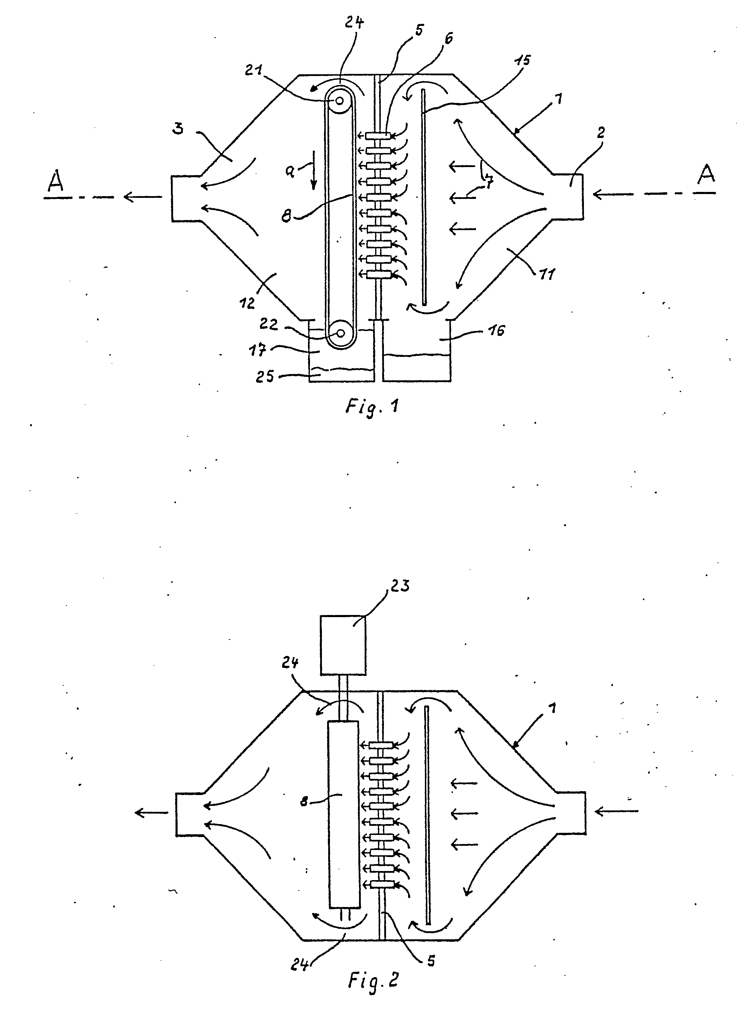

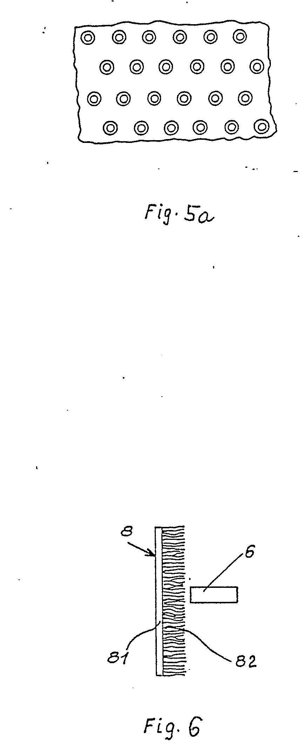

In den Figuren 1 und 2 bezeichnet 1 ein Gehäuse mit einer Eintrittsöffnung 2 für das zu reinigende Gas und einer Austrittsöffnung 3 für das gereinigte Gas. Der Innenraum des Gehäuses 1 ist durch eine Düsenwand 5 unterteilt, in der eine große Anzahl von die Wand durchdringenden Düsen 6 ange ordnet ist, und zwar vorzugsweise in einem regelmäßigen Muster von horizontalen und vertikalen Reihen, die vorzugsweise um eine halbe Düsenteilung gegeneinander versetzt sind (siehe Figur 5a) zur besseren Ausnutzung der Auffangmatte und der für die Düsen zur Verfügung stehenden Gesamtfläche. In der Eintrittskammer 11 für das zu reinigende Gas 7 ist eine Prallplatte 15 angeordnet, durch welche im Gas enthaltene grobe Partikel von den Düsen 6 ferngehalten werden und in einem am unteren Teil des Gehäuses angeordneten Sammelraum oder Sammelbehälter 16 aufgefangen werden. In der Austrittskammer 12 ist dicht vor den Austrittsöffnungen der Düsen 6 eine Auffangmatte 8 angeordnet, die als endloses umlauffähiges Band ausgebildet ist. Zu diesem Zweck ist das Band über zwei Rollen 21, 22 geführt, wobei die Rolle 21 mit einem Antrieb 23 versehen ist. Mit seinem umlaufenden unteren Ausschnitt taucht das Endlosband in eine Flüssigkeit, vorzugsweise Wasser, ein.

Figur 6 zeigt einen Ausschnitt aus einem Ausführungsbeispiel einer Auffangmatte 8 sowie eine auf die Auffangmatte gerichtete Düse 6. Die Auffangmatte besteht aus einer gasundurchlässigen Schicht 81, die in der Regel zugleich die tragende Schicht der Auffangmatte ist. Auf der den Düsen zugewandten Seite befindet sich auf der tragenden Schicht 81 eine Schicht 82, die gasdurchlässig und imstande ist, in starkem Maße Flüssigkeit aufzusaugen. Als Beispiel für solche Schichten kommen insbesondere Velour- und Schlingenteppichstrukturen aus wasserfestem Material, vorzugsweise aus Kunststoffen, wie zum Beispiel Polyamid oder PVC in Betracht. Als weitere Beispiele können Filz, Schwamm und Schaumstoffe mit offenen Poren genannt werden. Bei Verwendung von Velour- und Schlingenteppichstrukturen mit homogener Beschichtung kann die Grundschicht dieser Teppichmaterialien zugleich die tragende gasundurchlässigen Schicht 81 bilden. Die tragende Schicht 81 kann aber auch aus einem separaten Material bestehen, wie zum Beispiel Leder, Kunst stoff oder Metallband, auf welches die flüssigkeitsaufsaugende Schicht befestigt ist. Als Beispiel für die Dicke der Saugschicht 82 können 10 mm genannt werden.

Ganz allgemein soll die Schicht so beschaffen sein, daß sie einerseits das seitliche Abströmen der aus der Schicht 82 wiederaustretenden reflektierten Luft möglichst wenig behindert, andererseits aber die Festpartikel in möglichst hohem Maße zurückhält, was in Verbindung mit der Flüssigkeit zum Teil durch Adhäsion und Klebwirkung und zum Teil durch mechanisches Festhängen der Partikel in der Struktur der Schicht erreicht wird.

Die Vorrichtung nach Figur 1 und 2 arbeitet folgendermaßen: Das zu reinigende Gas strömt über den Einlaß 2 in die Einlaßkammer 11 ein und trifft auf die Prallplatte 15, an der die im Gas vorhandenen groben Partikel abgebremst werden und in den unterhalb der Prallplatte vorhandenen Sammelraum 16 fallen. Das Gas mit den feineren Partikeln strömt durch die Spalträume zwischen Prallplatte und Gehäusewand zu den Eintrittsöffnungen der Düsen 6. Durch die Düsen erhält das Gas eine Beschleunigung in Richtung auf die vor den Austrittsöffnungen der Düsen angebrachte Auffangmatte 8. Infolge der hohen Geschwindigkeit werden die im Gas enthaltenen Partikel gegen die Auffangmatte geschleudert, wo sie an der undurchlässigen Wand der Matte bzw. in der porösen Struktur der Saugschicht 82 festbacken oder durch Verhaken festgehalten werden, während das Gas selbst nach den Seiten weggedrängt wird und über die Spalträume 24 zwischen der Gehäuswande und der Auffangmatte zu der Austrittsöffnung des Gehäuses strömt.

Durch das Eintauchen des Endlosbandes in die Flüssigkeit werden die im Band festgehaltenen, aus dem Gas ausgeschiedenen Partikel überwiegend ohne weitere Maßnahmen herausgewaschen. Sie sinken in der Flüssigkeit zu Boden, wo sich ein Staubschlamm 25 absetzt. Will man diesen Reinigungs- und Regeneriereffekt des Bandes verbessern, so ist es auch möglich, entweder mechanische Abschabvorrichtungen vorzusehen oder das Band mit einem kräftigen Flüssigkeitsstrom, in der Regel Wasser, in einem Bereich außerhalb der Düsen zu bespritzen.

Die in den Figuren 1 und 2 dargestellte Ausführungsform kann in vielfacher Weise variiert werden. So ist es grundsätzlich auch möglich, statt die Auffangmatte als Endlosband auszubilden, eine bandförmige Auffangmatte zu verwenden, die von einer Rolle ab- und auf eine andere Rolle aufgewikkelt wird. Statt das in Figur 1 gezeigte Band in eine Flüssigkeit eintauchen zu lassen, ist es auch möglich, das Band an einer geeigneten Stelle durch einen Flüssigkeitsstrom zu benetzen. Der in Figur 1 gezeigte Flüssigkeitsbehälter kann am unteren Ende konisch ausgebildet und mit einem Ablaufventil versehen sein, durch welches der abgeschiedene Schlamm mit dem Wasser auf ein Sieb fällt, welches den Schlamm zurückhält, während das durchlaufende Wasser in den Flüssigkeitsheälter 17 zurückgepumpt wird.

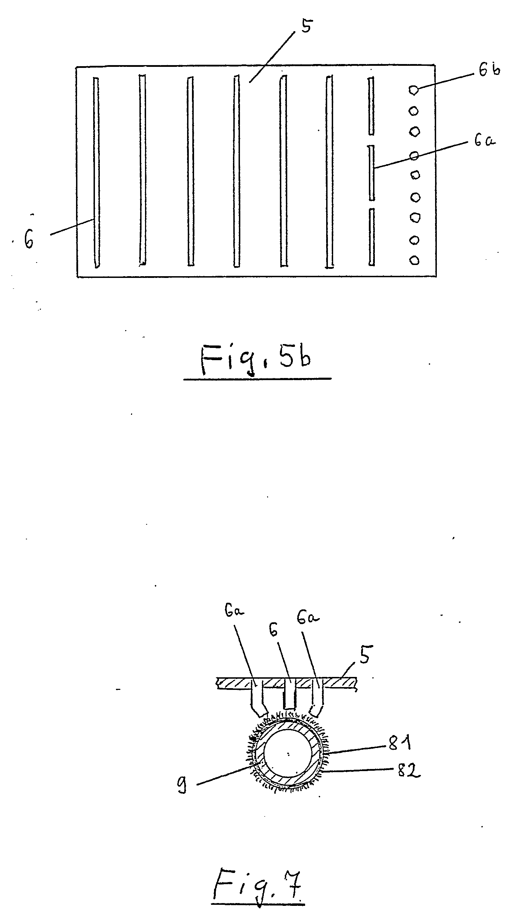

Die Düsen oder Öffnungen in der Düsenwand brauchen nicht zylindrisch ausgebildet zu sein, wie die Düsen 6b in der schematisch angedeuteten Düsenplatte gemäß Figur 5b. Sie können auch schlitzförmig ausgebildet sein, wie dies im linken Teil der Figur 5b gezeigt ist. Dabei können sich diese Schlitzdüsen über die gesamte Breite der Auffangmatte erstrecken oder nur über einen Teil dieser Breite, wie dies bei der zweiten Düsenreihe 6a in Figur 5b angedeutet ist. In diesem Falle setzt sich die Düsenreihe aus mehreren Schlitzdüsen zusammen. Es ist auch denkbar, daß in ein und derselben Düsenreihe schlitzförmige Düsen und Düsen mit runden oder ovalen Öffnungen kombiniert werden.

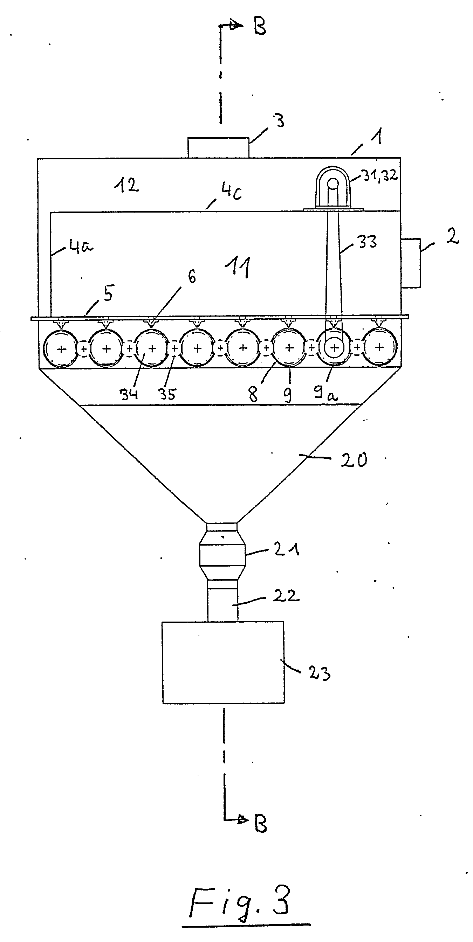

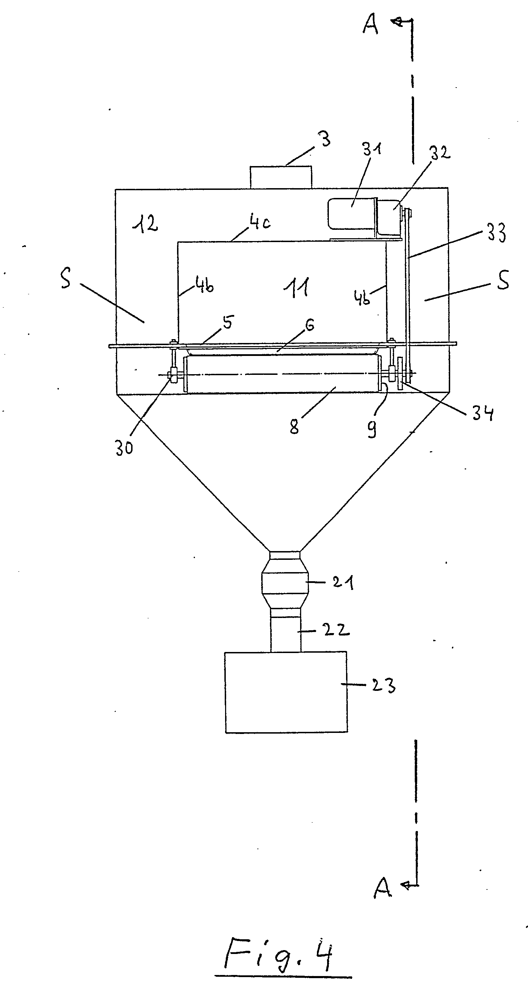

Die Ausführungsform nach den Figuren 3 und 4 unterscheidet sich von der nach den Figuren 1 und 2 im wesentlichen dadurch, daß statt einer einzigen, alle Düsen überdeckenden Auffangmatte eine Mehrzahl von Auffangmatten vorgesehen sind, von denen jede mit einem Teil der Düsen zusammenarbeitet. In den Figuren 3 und 4 sind für entsprechende Bauteile die gleichen Bezugszeichen wie in den Figuren 1 und 2 verwendet. Bei dieser Ausführungsform ist die mit den Düsen 6 besetzte Düsenwand 5 horizontal im Gehäuse 1 angeordnet. Auf der Anströmseite der Düsenwand, also oberhalb der Düsenwand, ist durch Trennwände 4,4a,4b,4c und einen Teil der Gehäuswand die Eintrittskammer 11 abgegrenzt, an welche ein Eintrittsstutzen 2 für das zu reinigende Gas angeschlossen ist. Unterhalb der Düsenwand 5 ist eine Reihe von Tragzylindern 9 angeordnet, die in Lagern 30 drehbar gelagert sind, welche Lager von der Düsenwand 5 getragen werden. Die Tragzylinder sind im wesentlichen parallel zueinander angeordnet, und ihre Drehachsen verlaufen im wesentlichen parallel zur Düsenwand 5. Auf jedem Tragzylinder ist eine Auffangmatte 8 der oben beschriebenen Art in der Weise befestigt, daß sie möglichst den gesamten Mantel des Tragzylinders bedeckt. Die Saugschicht 82 weist dabei radial nach außen.

Die Düsen oder Öffnungen 6 in der Düsenwand 5 sind in Reihen angeordnet (Figur 3), die parallel zu den Drehachsen der Tragzylinder verlaufen. In dem gezeigten Ausführungsbeispiel nach Figur 3 und 4 ist die Zahl der Düsenreihen und der Tragzylinder gleich groß, und die Düsen jeder Düsenreihe sind derart angeordnet, daß die Ausströmrichtung aus den Düsen senkrecht zur Düsenwand 5 und durch die Drehachse des zugehörigen Tragzylinders 9 verläuft. Die Tragzylinder mit den auf ihnen befestigten Auffangmatten können durch einen Antrieb rotiert werden, wobei im gezeigten Ausführungsbeispiel sämtliche Tragzylinder von einem einzigen Antrieb angetrieben werden. Dieser besteht aus einem Motor 31, einem Untersetzungsgetriebe 32 und einer Riemenkupplung 33 zwischen Getriebemotor und dem Tragzylinder 9a. Dieser Tragzylinder ist über Zahnradkupplungen mit sämtlichen anderen Tragzylindern 8 direkt oder indirekt gekoppelt, zu welchem Zweck jeder Tragzylinder mit einem größeren Zahnrad 34 versehen ist und zwischen je zwei Tragzylindern ein kleineres mit den beiden benachbarten größeren Zahnrädern 34 im Eingriff stehendes Zahnrad 35 vorhanden ist.

Im unteren Teil des Gehäuses befindet sich ein Sammelbecken 20, welches mit einer geeigneten Waschflüssigkeit, vorzugsweise Wasser, so weit gefüllt wird, daß die Auffangmatten auf der unteren Seite der Tragzylinder in die Flüssigkeit eintauchen. Hierdurch wird einerseits der in den Auffangmatten abgelagerte Schmutz ausgewaschen und andererseits eine erneute Benetzung der Auffangmatten 8 herbeigeführt. Über eine verschließbare Öffnung 21 und einen Klarsichtschlauch 22 ist unterhalb des Gehäuses 1 ein Auffangbehälter 23 für die abgeschiedenen Verunreinigungen angebracht.

Die Düsenwand 5 grenzt die Eintrittskammer 11 von der Austrittskammer 12 ab, die im gezeigten Ausführungsbeispiel die Eintrittskammer 11 von fünf Seiten umgibt.

Die Öffnungen in der Düsenwand 5 beziehungsweise die aus ihnen nach unten herausragenden Düsen 6 sind auch hier entweder in sehr geringem Abstand vor den Auffangmatten 8 angeordnet, oder berühren sogar die die Flüssigkeit aufnehmende Saugschicht 82 der Auffangmatten. Durch die Düsen 6 wird das Gas unmittelbar mit hoher Geschwindigkeit gegen die Auffangmatte geblasen, wobei sich die Verunreinigungen in der Saugschicht der Auffangmatte verhaken oder an dieser haften bleiben. Die Geschwindigkeit, mit der das zu reinigende Gas aus den Düsen austritt, liegt zweckmäßigerweise im Bereich von 30 bis 60 m/sec, vorzugsweise im Bereich von 50 bis 55 m/sec. Das von den Auffangmatten zurückgeworfene und gereinigte Gas strömt in Richtung beider Achslager der Tragzylinder ab und gelangt durch die beiden Seitenabschnitte S in den oberen Teil der Austrittskammer 12, von wo es über die Austrittsöffnung 3 der Vorrichtung abströmt. Die Düsenwand 5, die sich in den Figuren 1 und 2 über die gesamte Breite des Gehäuses 1 erstreckt, ist in den Seitenabschnitten S mit großen Durchtrittsfenstern für das nach oben strömende gereinigte Gas versehen. Alternativ kann sich die Düsenwand 5 auf die Grundfläche der Eintrittskammer 11 beschränken und durch geeignete, durch die Austrittskammer 12 verlaufende Verstrebungen an der Wand des Gehäuses 1 befestigt sein.

Die Düsen 6 oder Öffnungen in der Düsenwand 5 sind vorzugsweise spaltförmig ausgebildet, wie dies in Figur 5b mit 6 und 6a angedeutet ist. Die Schlitzdüsen können sich also über die gesamte Länge der Tragzylinder erstrecken.

In dem gezeigten Ausführungsbeispiel ist pro Tragzylinder nur eine Düsenreihe vorhanden. Es ist jedoch auch möglich, ein und demselben Tragzylinder zwei oder mehrere Düsenreihen zuzuordnen, wie dies in Figur 7 angedeutet ist, wo dem Tragzylinder 9 drei Düsenreihen zugeordnet sind. Die Düsen 6a sind dabei deart abgewinkelt, daß die Austrittsrichtungen aus den beiden seitlichen Düsen 6a ebenfalls senkrecht auf die Auffangmatte auftreffen und durch die Drehachse des Tragzylinders verlaufen.

Die Vorrichtung nach den Figuren 3 und 4 arbeitet folgendermaßen: Das zu reinigende Gas wird über die Eintrittsöffnung 2 in die Eintrittskammer 11 geführt, wo es auf die Düsenwand 5 trifft. Von hier strömt es unter hoher Beschleunigung durch die Düsen 6 gegen die Auffangmatten 8. Das Gas wird von den Auffangmatten umgeleitet, wobei die Verunreinigungen in den Auffangmatten hängenbleiben. Das Gas strömt dann zwischen Auffangmatten und der Düsenwand seitlich nach außen und über die Spalträume S zwischen der Eintrittskammer 11 und der Wand des Gehäuses 1 nach oben zur Austrittsöffnung 3. Während dieses Vorganges werden die Tragzylinder mit den Auffangmatten durch die Antriebsvorrichtung 31 bis 33 relativ langsam gedreht, wobei die unteren Teile der Tragzylinder mit den Auffangmatten in die Waschflüssigkeit des Sammelbeckens 20 zumindest eintauchen. Die Verunreinigungen werden dabei aus den Auffangmatten ausgewaschen und sammeln sich im Auffangbehälter 23.

Die Vorrichtung nach den Figuren 3 und 4 kann auch mit einem erheblich höheren Flüssigkeitstand in dem Sammelbecken 20 betrieben werden, als dies zuvor beschrieben wurde. Der Wasserstand kann (im Ruhezustand) bis an die Düsenwand 5 reichen. Hierdurch wird ein noch besserer Abscheidungsgrad erreicht. Beim Betrieb wird dann das Wasser durch das strömende Gas in den Räumen S etwas nach oben gedrückt. In diesem Falle wird eine gewisse Wassermenge als feiner Staub durch die Austrittsöffnung 3 ausgetragen. Dies ist jedoch insbesondere dann ohne Nachteil, wenn sich an den Austrittsstutzen ein nach oben gerichtetes Rohr anschließt, in welchem sich dieser Wasserstaub niederschlägt und zurückläuft.

Die Tragzylinder in Figur 3 und 4 sind vorzugsweise hohl ausgebildet. Die Befestigung der Auffangmatten auf den Tragzylinder kann beispielsweise durch Kleben erfolgen. Eine andere Möglichkeit besteht darin, die hohlen Tragzylinder mit einem Schlitz zu versehen, der mindestens die Länge der Auffangmatte hat, wobei der Schlitz etwas schmaler als die doppelte Dicke der Auffangmatte ist. Unter leichtem Aufbiegen des geschlitzten Tragzylinders können dann die in Längsrichtung des Tragzylinders verlaufenden Ränder der Auffangmatten in den Schlitz eingeschoben und durch die Ränder des Schlitzes festgeklemmt werden.

Das Gehäuse, das im Ausführungsbeispiel nach Figur 3 und 4 annähernd quadratisch ausgeführt ist und beispielsweise eine Seitenlänge von etwa 60 cm haben kann, kann auch rechteckig sein oder eine andere Form haben.

Der Antrieb der Tragzylinder kann in mannigfacher Weise ausgebildet sein. Statt alle Tragzylinder über einen gemeinsamen Antrieb anzutreiben, kann jeder Tragzylinder seinen eigenen Antrieb haben, oder es kann Gruppen von zwei oder mehr Tragzylindern je ein Antrieb zugeordnet sein.

Im Prinzip kann die Vorrichtung nach Figur 3 und 4 auch so aufgebaut sein oder eingesetzt werden, daß die Tragzylinder mit den Auffangmatten schräg oder sogar vertikal angeordnet sind. In diesem Falle muß jedoch das Auswaschen und Benetzen der Auffangmatten durch geeignete Besprüheinrichtungen durchgeführt werden, was natürlich auch bei waagerechter Anordnung möglich ist. Die horizontale Anordnung der Düsenwand mit den darunterliegenden Tragzylindern ist aber besonders vorteilhaft, da das Benetzen und Auswaschen hier durch einfaches Eintauchen in das Wasser des Sammelbeckens 20 möglich ist.

Die drehbare Befestigung der Tragzylinder kann statt an der Düsenwand 5 auch an den Wänden des Gehäuses 1 erfolgen.

Da die Waschflüssigkeit insbesondere durch Verdunstung allmählich verbraucht wird, ist das Sammelbecken 20 vorzugsweise mit einem Niveauregler versehen, der den Zufluß von Waschflüssigkeit so steuert, daß die Tragzylinder zumindest mit ihren unteren Seiten in die Waschflüssigkeit eintauchen. Um zu verhindern, daß zu viel Flüssigkeit mit dem ausströmenden Gas ausgetragen wird, können in den Seitenabschnitten S der Austrittskammer Tropfenabscheider angeordnet werden.

**Ansprüche**

1. Verfahren zur Reinigung von Gasen, bei dem das zu reinigende Gas gegen mindestens eine in einer Kammer befindliche praktisch gasundurchlässige Matte geblasen wird, die sich relativ zur Gaseintrittsstelle in die Kammer bewegt und die mit einer Flüssigkeit benetzt wird, **da-durch gekennzeichnet**, daß das zu reinigende Gas mit hoher Geschwindigkeit über eine Vielzahl parallelgeschalteter Düsen oder Öffnungen in die Kammer eintritt, daß die Düsen oder Öffnungen in leichtem Kontakt mit, unmittelbar vor oder in sehr geringem Abstand vor der Matte münden, daß die Matte als Auffangmatte ausgebildet ist, die auf der dem anströmenden zu reinigenden Gas zugewandten Seite eine Saugschicht trägt, die gute flüssigkeitsaufsaugende Eigenschaften hat und gasdurchlässig ist, und daß die Saugschicht mit Flüssigkeit, vorzugsweise Wasser, beladen ist.

2. Verfahren nach Anspruch 1, **dadurch gekennzeichnet**, daß der Abstand zwischen den Austrittsenden der Düsen oder Öffnungen und der Auffangmatte vorzugsweise im Bereich von 0 bis 10 mm, insbesondere im Bereich von 1 bis 2 mm, liegt.

3. Verfahren nach einem der vorhergehenden Ansprüche, **dadurch gekennzeichnet**, daß die Auffangmatte kontinuierlich oder intermittierend im wesentlichen senkrecht zur Anströmrichtung des zu reinigenden Gases bewegt wird.

4. Verfahren nach Anspruch 3, **dadurch gekennzeichnet**, daß die Auffangmatte als Endlosband ausgebildet ist, welches durch eine Flüssigkeit gezogen oder mit einer Flüssigkeit besprizt wird, in welcher/durch welche die von der Matte aufgefangenen Verunreinigungen ausge waschen werden und/oder die Beladung der Auffangmatte mit Flüssigkeit erneuert beziehungsweise ergänzt wird.

5. Verfahren nach einem der vorhergehenden Ansprüche, **dadurch gekennzeichnet**, daß die Flüssigkeit entweder in der Weise chemisch aktiv ist oder solche chemischen Zusätze enthält, daß in dem zu reinigenden Gas vorhandene unerwünschte Gaskomponenten in der Flüssigkeit chemisch gebunden oder in unschädliche Gase umgewandelt werden.

6. Verfahren nach einem der vorhergehenden Ansprüche, **dadurch gekennzeichnet**, daß die Strömungsgeschwindigkeit, mit der das zu reinigende Gas aus den Düsen oder Öffnungen austritt, größer als 20 m/s, vorzugsweise größer als 30 m/s, insbesondere größer als 50 m/s, ist.

7. Vorrichtung zur Reinigung von Gasen, bei der das Gehäuse der Vorrichtung eine Kammer besitzt, die eine Gaseintrittsstelle hat und in der mindestens eine praktisch gasundurchlässige Matte angeordnet ist, die relativ zur Gaseintrittsstelle bewegbar ist, wobei Mittel vorgesehen sind, die Auffangmatte mit einer Flüssigkeit zu benetzen, **dadurch gekennzeichnet**, daß das Gehäuse (1) durch eine Düsenwand (5) in mindestens zwei Kammern (11,12) unterteilt ist, eine Eintrittskammer (11) und die genannte Austrittskammer (12), daß in der Düsenwand (5) eine Vielzahl die Düsenwand durchdringende Düsen oder Öffnungen (6) angeordnet sind, die in der Austrittskammer in leichtem Kontakt mit, unmittelbar vor oder in geringem Abstand vor der mindestens einen Auffangmatte (8) münden, daß die Auffangmatte auf ihrer den Düsen zugewandten Seite eine Saugschicht (82) trägt, die gasdurchlässig ist und gute flüssigkeitsaufsaugende Eigenschaften hat, und daß die Eintrittskammer mit mindestens einer Eintrittsöffnung (2) für das zu reinigende Gas (7) versehen ist.

8. Vorrichtung nach Anspruch 7, **dadurch gekennzeichnet**, daß zwischen der Gehäusewand (1) und mindestens einer seitlichen Begrenzung der mindestens einen Auffangmatte (8) ein ausreichend freier Raum (24,S) für den Durchtritt des von der Auffangmatte umgelenkten Gasstromes vorhanden ist und daß die Austrittskammer (12) mit mindestens einer Austrittsöffnung (3) für das gereinigte Gas versehen ist.

9. Vorrichtung nach Anspruch 7 oder 8, **dadurch gekennzeichnet**, daß die mindestens eine Auffangmatte als ein an den Düsen (6) vorbeibewegbares umlauffähiges ꞏ ꞏlosband ausgebildet ist.

10. Vorrichtung nach einem der Ansprüche 7 bis 9, **dadurch gekennzeichnet**, daß unterhalb der mindestens einen umlaufend bewegbaren Auffangmatte ein mit Flüssigkeit gefülltes Becken vorhanden ist, in die die Auffangmatte teilweise oder ganz eintaucht.

11. Vorrichtung nach einem der Ansprüche 7 bis 10, **dadurch gekennzeichnet**, daß eine Vielzahl von Auffangmatten (8) vorhanden ist, von denen jede auf einem drehbaren Tragzylinder (9) angeordnet ist, daß die Drehachsen der Tragzylinder (9) im wesentlichen parallel zur Düsenwand (5) verlaufen und daß Antriebsmittel (31-35) zum Drehen der Tragzylinder vorhanden sind.

12. Vorrichtung nach Anspruch 11, **dadurch gekennzeichnet**, daß die Düsenwand (5) im wesentlichen horizontal angeordnet ist und die Tragzylinder (9) unterhalb der Düsenwand (5) angeordnet sind.

13. Vorrichtung nach einem der Ansprüche 7 bis 12, **dadurch gekennzeichnet**, daß alle oder ein Teil der Düsen schlitzförmig ausgebildet sind/ist, wobei die Schlitze im wesentlichen parallel zur Drehachse der Tragzylinder (9) oder sonstigen Antriebsrollen (21,22) für die Auffangmatten verlaufen und sich über die gesamte oder einen Teil der Länge der Tragzylinder (9) oder sonstigen Antriebsrollen erstrecken.

14. Vorrichtung nach einem der Ansprüche 11 bis 13, **dadurch gekennzeichnet**, daß Düsen (6,6a), die zu einer, zwei oder mehr Düsenreihen gehören, derart auf ein und denselben Tragzylinder gerichtet sind, daß die Ausströmrichtung der Düsen senkrecht zur Mantelfläche und durch die Drehachse dieses Tragzylinders (9) verläuft.

15. Vorrichtung nach einem der vorhergehenden Ansprüche, **dadurch gekennzeichnet**, daß die gasdurchlässige und flüssigkeitsaufsaugende Schicht (82) der Auffangmatte (8) aus Velour- oder Schlingenteppichstrukturen aus wasserfestem Material, vorzugsweise aus Kunststoffen, wie zum Beispiel Polyamid oder PVC, besteht.

30.11.1988
22097 PE

Fig. 1

Fig. 2

30.11.1988
22097 FE

Fig. 3

Fig. 4

30.11.1988
22097 PE

Fig. 5a

Fig. 6

30.11.1988
22097 PE

Fig. 5b

Fig. 7